# EUROPÄISCHE PATENTSCHRIFT

(11) **EP 3 533 976 B1**
(45) Veröffentlichungstag und Bekanntmachung des Hinweises auf die Patenterteilung: **12.08.2020**
(21) Anmeldenummer: 18159456.5
(22) Anmeldetag: 01.03.2018
(51) Int. Cl.: F01K 7/34, F01K 7/44, F01K 17/02, F01K 17/06, F01K 23/12

(54) **ANLAGE MIT ENTNAHMEKONDENSATIONSTURBINE UND ORC-PROZESS**
INSTALLATION WITH CONDENSATION TURBINE AND ORC PROCESS
INSTALLATION À TURBINE À CONDENSATION À SOUTIRAGE ET PROCESSUS ORC

(43) Veröffentlichungstag der Anmeldung: 04.09.2019
(73) Patentinhaber: Siemens Aktiengesellschaft, 80333 München (DE)
(72) Erfinder: Hannemann, Frank, 91341 Röttenbach (DE); Schulte, Stephen, 91054 Buckenhof (DE)

(56) Entgegenhaltungen:
- US-A1- 2011 203 279
- US-A1- 2013 247 571
- US-A1- 2014 000 668

## Beschreibung

Die Erfindung betrifft eine Anlage umfassend eine Entnahmekondensationsturbine sowie ein Verfahren zu deren Betrieb. Die Dokumente US 2013/247571 A1, US 2011/203279 A1 und US 2014/000668 A1 offenbaren Dampfturbinen.

Blockheizkraftwerke (BHKW) stellen bei regionalen Stromerzeugern und Stadtwerken ein weit verbreitetes Anlagenkonzept dar, welches die Stromerzeugung mit Fernwärme- und/oder industriellen Wärmebereitstellung in vorteilhafter Weise koppelt und hohe thermische Wirkungsgrade und niedrige CO₂-Emissionen ermöglichen lässt. Durch die aktuellen Veränderungen des Strommarktes und eine veränderte Einspeisevergütung wird dieses Konzept zunehmend unwirtschaftlich und mit neuen Herausforderungen konfrontiert. Erzielbare Stromerlöse und Jahreszeit-spezifische Wärmebereitstellung verhalten sich zunehmend gegenläufig und die Kopplung von Wärme- und Stromerzeugung erschweren einen flexiblen Betrieb. BHKW-Anlagen können damit nur sehr eingeschränkt auf die fluktuierende regenerative Stromeinspeisung und die damit verbundenen Strompreisänderungen reagieren. Um weiterhin eine wirtschaftliche Fahrweise sicherzustellen, sind daher standortspezifische Anpassungen des Anlagenkonzeptes und eine höhere Flexibilität zwischen Wärme- und Stromerzeugung erforderlich. Ein weiterer Faktor für den wirtschaftlichen Betrieb sind günstige Einkaufspreise für nicht speicherbare Brennstoffe wie z.B. Erdgas oder Müll, die nur über langfristige Abnahme- bzw. Lieferverträge erreicht werden können und die gewünschte Flexibilität auf der Produktseite weiter erschweren.

Heutige BHKW-Konzepte existieren in unterschiedlicher Ausgestaltung und die Energieerzeugung erfolgt entweder durch Verbrennung fossiler oder biogener Brennstoffe wie Biomasse und Müll. Die bei der Verbrennung freigesetzte Wärme wird in der weiteren Prozesskette entweder direkt über einen Dampfkessel oder indirekt über das Abgas eines Gasmotors bzw. einer Gasturbine in einen Wasser/Dampfkreislauf eingekoppelt und in vielen Fällen über eine Entnahmekondensationsturbine zur Stromerzeugung genutzt. Der erzeugte und exergetisch hochwertige Dampf wird innerhalb der Turbine auf einen Druck kleiner 10 bar entspannt und dann über die Niederdruckbeschaufelung in einen Kondensator geleitet oder einer Dampfentnahme zugeführt, die im weiteren Verlauf die Wärme an ein Wärmenetz überträgt. Die Dampfentnahme an der Entnahmekondensationsturbine kann dabei geregelt oder ungeregelt erfolgen.

Der Erfindung liegt das Problem zugrunde, dass Entnahmekondensationsturbinen bei hoher geregelter Dampfentnahme den Niederdruck-Teil mit der Niederdruckbeschaufelung weitestgehend verschließen und die Gefahr der Ventilationswärme und einer Temperaturüberschreitung an der letzten Turbinenstufe besteht. Um einen Ausfall der Dampfturbine zu vermeiden, muss die Dampfentnahme daher auf einen maximalen Wert begrenzt werden. Im Gegensatz zu einer hohen Dampfentnahme steigt bei sehr geringer Entnahme die Durchströmung des Niederdruck-Teils und die Belastung des Kondensators an, was einen Anstieg der Kondensations- und Turbinenaustrittstemperatur in Abhängigkeit der Umgebungstemperatur zur Folge hat. Auch in diesem Fall kann eine Leistungsbegrenzung erforderlich werden. Die unterschiedliche Belastung des Niederdruck-Teiles kann weiterhin zur Folge haben, dass die Anfälligkeit der Rotordynamik in bestimmten Betriebssituationen steigt. Speziell bei Sommerbetrieb mit geringem Wärmebedarf und hohen Umgebungstemperaturen entsteht eine starke Belastung des kalten Endes der Dampfturbine, während in der kälteren Jahreszeit die Niederdruck-Turbine und der Kondensator größtenteils in Teillast betrieben werden müssen. Eine zu große Differenz zwischen beiden Auslegungsfällen für die Dampfturbine erhöht die Risiken während des Betriebes. Eine zusätzliche oder alternative ungeregelte Entnahme kann dieses Risiko noch verstärken, da Änderungen des Düsendruckes an der Hochdruck-Beschaufelung ebenfalls zu Problemen der Rotordynamik führen können. Stark veränderliche geregelte als auch ungeregelte Entnahmen verändern auch den Axialschub an der Turbine, was durch entsprechenden Mehraufwand an Lagern und Kompensatoren ausgeglichen werden muss. Da Entnahmekondensationsturbinen durch ihre unterschiedlichen Entnahmemengen und Leistungsgrößen keine Standardmaschinen darstellen, müssen sie auf die jeweiligen Betriebsfälle optimiert werden und es entstehen höhere Kosten, Fertigungszeiten und Betriebsrisiken.

Bei bisherigen BHKW-Konzepten mit Entnahmekondensationsmaschinen wurden häufig längere Inbetriebsetzungszeiten und anlagentechnische Anpassungen erforderlich. Eine Anpassung auf die veränderten Rahmenbedingungen des Strommarktes ist nur eingeschränkt möglich und erfordert risikoreiche Anpassungen an Dampfturbine und verbindenden Wasser/Dampfsystemen. In vielen Fällen muss daher auf einen höheren Stromerlös zugunsten eines sicheren Anlagenbetriebes verzichtet werden. Da die Kesselleistung aufgrund von Bezugsverpflichtungen auf der Brennstoffseite nicht immer reduziert werden kann, muss in einigen Fällen die erzeugte Wärme in den Sommermonaten verworfen werden. Veränderungen in den Wärmenetzen können diesen Trend zusätzlich verschärfen.

Aufgabe der Erfindung ist es, eine Vorrichtung und ein Verfahren anzugeben, bei denen die Flexibilität eines BHKW-Konzeptes mit Entnahmekondensationsmaschine verbessert und der Dampfturbinenbetrieb vergleichmäßigt wird.

Erfindungsgemäß wird die auf eine Vorrichtung gerichtete Aufgabe gelöst durch eine Anlage umfassend eine Entnahmekondensationsturbine mit einer Dampfentnahme und einer von der Dampfentnahme abzweigenden Dampfleitung, in der ein Heizkondensator eines Fernwärmenetzes angeordnet ist, bei der in der Dampfleitung ferner eine Vorrichtung zum Vorwärmen und Verdampfen eines Arbeitsmediums eines Organic Rankine Cycles (ORC) parallel zum Heizkondensator des Fernwärmenetzes angeordnet ist. In Organic Rankine Cycles erfolgt der Betrieb von Dampfturbinen mit einem anderen Arbeitsmedium als Wasserdampf.

Der parallel zum Heizkondensator angeordnete ORC-Prozess entnimmt ebenfalls Wärme aus der Dampfentnahme der Entnahmekondensationsmaschine und kann somit den veränderlichen Wärmebedarf des Fernwärmenetzes ausgleichen, wodurch eine weitestgehend gleichbleibende Dampfentnahme an der Turbine möglich wird. Somit wird eine vergleichmäßigte Fahrweise der Entnahmekondensationsturbine bei gleichzeitig veränderlicher Dampfversorgung eines Heizdampfnetzes und flexiblerer Stromerzeugung sicherstellt.

In einer vorteilhaften Ausführungsform der Erfindung ist eine Druckregelung vorgesehen, mit welcher die Dampfmengen eingestellt werden können, die im Betrieb dem Heizkondensator bzw. der Vorrichtung zum Vorwärmen und Verdampfen eines Arbeitsmediums des Organic Rankine Cycle zugeführt werden. Somit kann automatisch, schnell und flexibel auf den Heizwärmebedarf im Fernwärmenetz reagiert werden.

In einer weiteren vorteilhaften Ausführungsform der Erfindung ist die Druckregelung so ausgelegt, dass ein Entnahmedruck an der Dampfentnahme unabhängig von einem Wärmebedarf im Fernwärmenetz innerhalb eines vorab definierten Bereichs gehalten wird.

Es ist zweckmäßig wenn das Arbeitsmedium für den Organic Rankine Cycle R1332zd, R1336 oder R1224 ist. Um die Integration der ORC-Anlage optimal an die Dampfentnahme der Entnahmekondensationsturbine und der Versorgung des Fernwärmenetzes anzupassen, ist es nämlich notwendig, ein Arbeitsmedium zu wählen, dessen Verdampfungstemperatur eine ausreichende Grädigkeit (pinch point) zwischen Dampfentnahme und ORC-Arbeitsmedium sicherstellt und dessen Isobaren im Heizdampfbereich einen möglichst großen Abstand aufweisen. Üblicherweise erfolgt die Aufwärmung des Fernwärmenetzes auf eine Temperatur von ca. 130°C und erfordert eine Dampfentnahme an der Turbine von >140°C. Da der ORC-Kreislauf parallel zum Heizkondensator angeordnet ist, muss das Arbeitsmedium so gewählt werden, dass einerseits eine Verdampfungstemperatur < 130°C und andererseits ein möglichst isentroper Verlauf der Phasengrenze des Arbeitsmediums und ein Kondensationsdruck größer 1 bar erreicht werden kann. Des Weiteren ist für eine besonders kostengünstige Ausgestaltung des ORC-Prozesses neben einem minimalen ODP [Ozonschichtschädigendes Potenzial (ODP), Ozone Depletion Potential] und GWP [Treibhausfaktor (GWP, Global Warming Potential)] ein nichtbrennbares Arbeitsmedium erforderlich, um die kostenintensiven Anforderungen des Ex-Schutzes vermeiden zu können. Um unter den genannten Anforderungen einen maximalen Wirkungsgrad zu erreichen, werden für den der Dampfturbine nachgeschalteten ORC-Prozess die genannte Arbeitsmedien vorgeschlagen.

Die auf ein Verfahren gerichtete Aufgabe wird gelöst durch ein Verfahren zum Betreiben einer Anlage umfassend eine Entnahmekondensationsturbine mit einer Dampfentnahme, bei dem Dampf für einen Heizkondensator eines Fernwärmenetzes an der Dampfentnahme entnommen wird, bei dem ferner Dampf für einen Organic Rankine Cycle geregelt so an der Dampfentnahme entnommen wird, dass ein Entnahmedruck an der Dampfentnahme innerhalb eines vorab definierten Bereichs gehalten wird.

Es ist vorteilhaft, wenn der Organic Rankine Cycle für eine Sekundärleistungsregelung eingesetzt wird, indem eine dem Heizkondensator zur Verfügung gestellte Dampfmenge zumindest zeitweise unter Ausnutzung eines Wärmespeicherreservoirs des Fernwärmenetzes und einer erlaubten Bandbreite einer Vorlauftemperatur im Fernwärmenetz verringert wird. Durch Wärmeverschiebung zwischen Heizkondensator und ORC-Verdampfer kann mehr Wärme der ORC-Turbine zur Verfügung gestellt werden. Aufgrund der Flexibilität der Dampfentnahme an der Turbine ist dies möglich, insbesondere, da ORC-Prozesse keine überwachungspflichtigen Anlagen darstellen und über eine leittechnische Schnittstelle direkt vom Netzbetreiber als virtuelles Kraftwerk gesteuert werden können.

Es ist weiterhin vorteilhaft, wenn als Arbeitsmedium für den ORC R1332zd oder R1336 oder R1224 verwendet wird.

Ganz allgemein ist mit der vorgeschlagenen Lösung eine Wirkungsgraderhöhung erreichbar, wenn ein ORC-Prozess dem Wasser/Dampf Kreislauf mit Entnahmekondensationsturbine thermodynamisch nachgeschaltet wird, da der Dampfprozess für hohe Temperaturen des Arbeitsmediums und der ORC-Prozess für niedrige Temperaturen den maximal möglichen Wirkungsgrad verspricht.

Neben der Flexibilisierung der Wärmenutzung hat der ORC-Prozess auch die Aufgabe, die Regelung des Entnahmedruckes innerhalb der Dampfturbine zu unterstützen. Die Regelung des ORC-Prozesses erfolgt in gestufter Form durch eine primäre Leistungs- und sekundäre Begrenzungsregelung. Somit ist sichergestellt, dass die durch den Netzverteiler angeforderte Sekundärleistung den Betrieb der Entnahmekondensationsmaschine nicht negativ beeinflusst.

Die Anlage gemäß der Erfindung ist kompakt und kostengünstig und ermöglicht eine Verkleinerung des Niederdruckteiles der Dampfturbine und des Kondensators. Aufgrund der thermodynamischen Stoffeigenschaften organischer Arbeitsmedien ist ein höherer Wirkungsgrad im niedrigen Temperaturbereich und bei höheren Umgebungstemperaturen verglichen zu einer Dampfturbine erreichbar. Ein weiterer Vorteil ist die einfache Nachrüstbarkeit in ein vorhandenes Niederdruckdampfnetz (3-6bar) und nachträgliche Flexibilisierung eines vorhandenen BHKW-Anlagenkonzeptes.

Die Erfindung wird beispielhaft anhand der Zeichnung näher erläutert. Es zeigt schematisch und nicht maßstäblich:

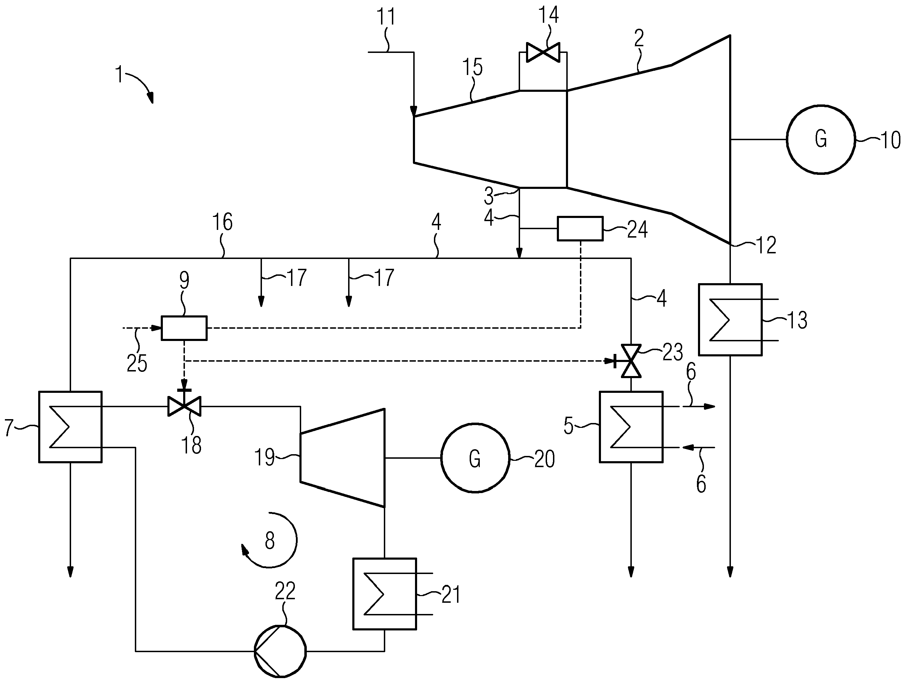

- Figur 1: eine Anlage mit Entnahmekondensationsturbine und ORC-Kreislauf nach der Erfindung.

Die Figur 1 zeigt schematisch und beispielhaft eine Anlage 1 umfassend eine Entnahmekondensationsturbine 2, an die ein Generator 10 gekoppelt ist. Die Entnahmekondensationsturbine 2 weist einen Dampfeinlass 11 und einen Dampfauslass 12 auf. Der Dampfauslass 12 mündet in einen Kondensator 13. Ferner weist die Entnahmekondensationsturbine 2 eine Dampfentnahme 3 auf, von der eine Dampfleitung 4 abzweigt, sowie ein erstes Ventil 14 zur Druckhaltung an der Hochdruckturbine 15.

Die Dampfleitung 4 verzweigt sich über eine sogenannte Dampfschiene 16, über die mehrere Verbraucher an die Dampfleitung 4 geschaltet werden können. Figur 1 zeigt verschiedene Heizdampfentnahmen 17 sowie eine Abzweigung zu einer Vorrichtung 7 zum Vorwärmen und Verdampfen eines Arbeitsmediums eines Organic Rankine Cycles 8 und eine weitere Abzweigung zu einem Heizkondensator 5 eines Fernwärmenetzes 6.

Der Organic Rankine Cycle 8 umfasst neben der Vorrichtung 7 zum Vorwärmen und Verdampfen eines geeigneten Arbeitsmediums ein zweites Ventil 18, eine ORC-Turbine 19, einen an die ORC-Turbine 19 gekoppelten Generator 20, einen ORC-Kondensator 21 und eine ORC-Pumpe 22.

Ein drittes Ventil 23 ist in der Dampfleitung 4 unmittelbar vor dem Heizkondensator 5 angeordnet. In Figur 1 ist erkennbar, dass Heizkondensator 5 und Vorrichtung 7 parallel zueinander in der Dampfleitung 4 angeordnet sind.

In der Ausführungsform der Figur 1 ist eine Druckregelung 9 vorgesehen, mit welcher Dampfmengen eingestellt werden können, die im Betrieb dem Heizkondensator 5 bzw. der Vorrichtung 7 zum Vorwärmen und Verdampfen eines Arbeitsmediums des Organic Rankine Cycles 8 zugeführt werden. Zu diesem Zweck erhält die Druckregelung 9 von einer Messstelle 24 Informationen über den in der Dampfleitung 4 vorherrschenden Druck. Außerdem wird über einen Leistungsregler 25 ein Soll/Ist-Abgleich für den Organic Rankine Cycle 8 durchgeführt. Über das zweite Ventil 18 erfolgt eine indirekte Regelung der Dampfentnahme für den ORC-Kreislauf 8. Entsprechend erfolgt eine direkte Regelung für den Heizkondensator 6 über das dritte Ventil 23.

## Patentansprüche

1. Anlage (1) umfassend eine Entnahmekondensationsturbine (2) mit einer Dampfentnahme (3) und einer von der Dampfentnahme (3) abzweigenden Dampfleitung (4), in der ein Heizkondensator (5) eines Fernwärmenetzes (6) angeordnet ist, **dadurch gekennzeichnet, dass** in der Dampfleitung (4) ferner eine Vorrichtung (7) zum Vorwärmen und Verdampfen eines Arbeitsmediums eines Organic Rankine Cycles (8) parallel zum Heizkondensator (5) des Fernwärmenetzes (6) angeordnet ist.

2. Anlage (1) nach Anspruch 1, wobei eine Druckregelung (9) vorgesehen ist, mit welcher Dampfmengen eingestellt werden können, die im Betrieb dem Heizkondensator (5) bzw. der Vorrichtung (7) zum Vorwärmen und Verdampfen eines Arbeitsmediums des Organic Rankine Cycles (8) zugeführt werden.

3. Anlage (1) nach Anspruch 2, wobei die Druckregelung (9) so ausgelegt ist, dass ein Entnahmedruck an der Dampfentnahme (3) unabhängig von einem Wärmebedarf im Fernwärmenetz (6) innerhalb eines vorab definierten Bereichs gehalten wird.

4. Anlage (1) nach einem der Ansprüche 1 bis 3, wobei das Arbeitsmedium für den Organic Rankine Cycle (8) nichtbrennbar ist.

5. Anlage (1) nach einem der Ansprüche 1 bis 4, wobei das Arbeitsmedium für den Organic Rankine Cycle (8) eine Verdampfungstemperatur unterhalb der Temperatur aufweist, auf die das Fernwärmenetz (6) im Betrieb aufgewärmt wird.

6. Anlage (1) nach einem der Ansprüche 1 bis 5, wobei das Arbeitsmedium für den Organic Rankine Cycle (8) R1332zd, R1336 oder R1224 ist.

7. Verfahren zum Betreiben einer Anlage (1) umfassend eine Entnahmekondensationsturbine (2) mit einer Dampfentnahme (3), bei dem Dampf für einen Heizkondensator (5) eines Fernwärmenetzes (6) an der Dampfentnahme (3) entnommen wird, **dadurch gekennzeichnet, dass** ferner Dampf für einen Organic Rankine Cycle (8) geregelt so an der Dampfentnahme (3) entnommen wird, dass ein Entnahmedruck an der Dampfentnahme (3) innerhalb eines vorab definierten Bereichs gehalten wird.

8. Verfahren nach Anspruch 7, wobei der Organic Rankine Cycle (8) für eine Sekundärleistungsregelung eingesetzt wird, indem eine dem Heizkondensator (5) zur Verfügung gestellte Dampfmenge zumindest zeitweise unter Ausnutzung eines Wärmespeicherreservoirs des Fernwärmenetzes (6) und einer erlaubten Bandbreite einer Vorlauftemperatur im Fernwärmenetz (6) verringert wird.

9. Verfahren nach einem der Ansprüche 7 oder 8, wobei als Arbeitsmedium für den Organic Rankine Cycle (8) R1332zd oder R1336 oder R1224 verwendet wird.

## Claims

1. Installation (1) comprising an extraction condensing turbine (2) with a steam extraction point (3) and a steam line (4), which branches off from the steam extraction point (3) and arranged in which there is a heating condenser (5) for a district heating network (6), **characterized in that** in the steam line (4) there is also a device (7) for preheating and evaporating a working medium of an organic Rankine cycle (8) arranged in parallel with the heating condenser (5) of the district heating network (6).

2. Installation (1) according to Claim 1, wherein a pressure control (9) is provided, by which amounts of steam that are fed to the heating condenser (5) or the device (7) for preheating and evaporating a working medium of the organic Rankine cycle (8) during operation can be set.

3. Installation (1) according to Claim 2, wherein the pressure control (9) is designed such that an extraction pressure at the steam extraction point (3) is kept within a predefined range irrespective of a heat demand in the district heating network (6).

4. Installation (1) according to one of Claims 1 to 3, wherein the working medium for the organic Rankine cycle (8) is non-combustible.

5. Installation (1) according to one of Claims 1 to 4, wherein the working medium for the organic Rankine cycle (8) has an evaporation temperature below the temperature to which the district heating network (6) is heated up during operation.

6. Installation (1) according to one of Claims 1 to 5, wherein the working medium for the organic Rankine cycle (8) is R1332zd, R1336 or R1224.

7. Method for operating an installation (1) comprising an extraction condensing turbine (2) with a steam extraction point (3), in which steam for a heating condenser (5) of a district heating network (6) is extracted at the steam extraction point (3), **characterized in that** steam for an organic Rankine cycle (8) is also extracted at the steam extraction point (3), while being controlled in such a way that an extraction pressure at the steam extraction point (3) is kept within a predefined range.

8. Method according to Claim 7, wherein the organic Rankine cycle (8) is used for secondary power control, in that an amount of steam made available to the heating condenser (5) is reduced, at least for a time, while utilizing a heat storage reservoir of the district heating network (6) and an allowed bandwidth of a flow temperature in the district heating network (6).

9. Method according to either of Claims 7 and 8, wherein R1332zd, R1336 or R1224 is used as the working medium for the organic Rankine cycle (8).

## Revendications

1. Installation (1), comprenant une turbine (2) à condensation à soutirage ayant un soutirage (3) de vapeur et un conduit (4) pour de la vapeur, qui bifurque du soutirage (3) de vapeur et dans lequel est monté un condenseur (5) de chauffage d'un réseau (6) de chaleur interurbain, **caractérisée en ce que**, dans le conduit (4) pour de la vapeur, est monté, en outre, en parallèle au condenseur (5) de chauffage du réseau (6) de chaleur interurbain, un système (7) de préchauffage et d'évaporation d'un fluide de travail d'un cycle (8) de Rankine organique.

2. Installation (1) suivant la revendication 1, dans laquelle il est prévu une régulation (9) de la pression, par laquelle peuvent être réglées des quantités de vapeur, qui, en fonctionnement, sont envoyées au condenseur (5) de chauffage ou au système (6) pour préchauffer et évaporer un fluide de travail du cycle (8) de Rankine organique.

3. Installation (1) suivant la revendication 2, dans laquelle la régulation (9) de pression est conçue de manière à ce qu'une pression de soutirage au soutirage (3) de vapeur soit maintenue dans une plage définie à l'avance, indépendamment d'un besoin de chaleur dans le réseau (8) de chaleur interurbain.

4. Installation (1) suivant l'une des revendications 1 à 3, dans laquelle le fluide de travail pour le cycle (8) de Rankine organique n'est pas combustible.

5. Installation (1) suivant l'une des revendications 1 à 4, dans laquelle le fluide de travail pour le cycle (8) de Rankine organique a un point d'évaporation en dessous de la température, à laquelle le réseau (6) de chaleur interurbain est porté en fonctionnement.

6. Installation (1) suivant l'une des revendications 1 à 5, dans laquelle le fluide de travail pour le cycle (8) de Rankine organique est R1332zd, R1336 ou R1224.

7. Procédé pour faire fonctionner une installation (1), comprenant une turbine (2) à condensation à son tirage, ayant un soutirage (3) de vapeur, dans lequel on soutire au soutirage (3) de vapeur de la vapeur pour un condenseur (5) de chauffage d'un réseau (6) de chaleur interurbain, **caractérisé en ce que** l'on soutire, en outre, de manière réglée au soutirage de vapeur de la vapeur pour un cycle (8) de Rankine organique, de manière à maintenir une pression de soutirage au soutirage (3) de vapeur dans une plage définie à l'avance.

8. Procédé suivant la revendication 7, dans lequel on utilise le cycle (8) de Rankine organique pour une régulation de puissance secondaire, en diminuant une quantité de vapeur mise à disposition du condenseur (5) de chauffage, au moins de temps en temps en tirant parti d'un réservoir d'accumulation de chaleur du réseau (6) de chaleur interurbain et d'une largeur de bande autorisée d'une température de marche dans le réseau (6) de chaleur interurbain.

9. Procédé suivant l'une des revendications 7 ou 8, dans lequel on utilise comme fluide de travail pour le cycle (8) de Rankine organique R1332zd ou R1336 ou R1224.
